# EUROPÄISCHE PATENTSCHRIFT

(11) **EP 2 428 695 B1**
(45) Veröffentlichungstag und Bekanntmachung des Hinweises auf die Patenterteilung: **03.07.2013**
(21) Anmeldenummer: 11180379.7
(22) Anmeldetag: 07.09.2011
(51) Int. Cl.: F16D 65/14

(54) **Im Bremssattel einer Scheibenbremse angeordnete Zuspanneinrichtung**
Adjusting unit in the brake calliper for a disc brake
Dispositif de serrage agencé dans le disque de serrage d'un frein à disque

(30) Priorität: 09.09.2010 DE 102010044911
(43) Veröffentlichungstag der Anmeldung: 14.03.2012
(73) Patentinhaber: KNORR-BREMSE Systeme für Nutzfahrzeuge GmbH, 80809 München (DE)
(72) Erfinder: Brandl, Christian, 94447 Plattling (DE); Tropp, Martin, 84364 Bad Birnbach (DE)
(74) Vertreter: Mattusch, Gundula

(56) Entgegenhaltungen:
- EP-B1- 1 599 680
- WO-A1-2006/024512

## Beschreibung

Die Erfindung betrifft eine im Bremssattel einer Scheibenbremse für ein Zugfahrzeug, insbesondere ein Nutzfahrzeug, angeordnete Zuspanneinrichtung gemäß dem Oberbegriff des Anspruchs 1.

Bei einer vorzugsweise druckluft- oder elektromechanisch betätigbaren und vor allem in Nutzfahrzeuge einbaubaren Scheibenbremse erfolgt die Zuspannung im Falle einer Bremsung mittels einer Zuspanneinrichtung, die einen Hebel sowie eine Wälzrolle aufweist, die parallel zu einer Bremsscheibe verläuft und eine Schwenkachse für den Hebel bildet und die mittels eines am Hebel befestigten Wälzrollenhalters axial und radial gesichert gehalten ist.

Hierzu ist der aus der gattungsbildenden EP 1 599 680 B1 bekannte Wälzrollenhalter, der aus Blech besteht und mit angeformten Käfigrückführungen versehen ist, endseitig mit zwei Laschen versehen, die an den Stirnseiten der Wälzrolle anliegen und damit versehene Lagerzapfen übergreifen.

Um eine den Belastungsanforderungen entsprechende Vergütung des Materials zu erreichen, ist der Wälzrollenhalter wärmebehandelt. Dabei besteht die Gefahr eines Verziehens mit der Folge im einfachsten Fall einer Nachbearbeitung aber auch des Ausschusses, beides mit erheblichen Kosten verbunden.

Darüber hinaus steht der bekannte Wälzrollenhalter aufgrund seines sozusagen Multifunktionscharakters einer im Fahrzeugbau ständig geforderten gewichtsoptimierten Gestaltung entgegen, die eine entsprechende Modifizierung der Wälzrolle einschließt.

In der WO 2006/024512 A1 ist eine Zuspanneinrichtung geoffenbart, bei der die Käfigrückführungen an einer Lagerschale angeformt sind, in der die Wälzrolle einliegt. Zur Verschiebesicherung der Wälzrolle ist ein Sicherungsmittel in Form einer Klammer mit dem Hebel verbunden und greift als separates Teil in eine laufende Nut der Wälzrolle ein.

Der Erfindung liegt die Aufgabe zugrunde, eine Zuspanneinrichtung der gattungsgemäßen Art so weiterzuentwickeln, dass sie dass sie konstruktiv einfacher aufgebaut, kostengünstiger herstellbar sowie gewichtsoptimiert ist.

Diese Aufgabe wird durch eine Zuspanneinrichtung mit den Merkmalen des Anspruchs 1 gelöst.

Die in diesem Sinn ausgebildete Zuspanneinrichtung bietet gegenüber der bisher bekannten und eingesetzten wesentliche Vorteile.

Hierzu ist insbesondere zu nennen, dass die Gefahr eines Verziehens des Wälzrollenhalters bei der erwähnten notwendigen Wärmebehandlung zumindest minimiert ist, wodurch sich durchaus signifikante Kostenvorteile ergeben, da im Wesentlichen keine Nachbearbeitung mehr erforderlich ist, bzw. Ausschuss vermieden wird.

Gemäß der Erfindung greift ein mittig angeordnetes Halteelement des Wälzrollenhalters formschlüssig in die Mantelfläche ein. Dadurch kann auf die, wie zum Stand der Technik beschrieben, bisher erforderlichen stirnseitigen Zapfen der Wälzrolle verzichtet werden, woraus sich sowohl eine Gewichtseinsparung als auch eine Bauraumoptimierung ergibt bzw. eine Vergrößerung der Auflagefläche der angeformten Käfigrückführungen und korrespondierend damit einer Brücke, in der Stellspindeln gelagert sind, über die ein Bremsbelag gegen eine Bremsscheibe pressbar ist.

Die Vergrößerung der Auflagefläche schafft die Möglichkeit, die Gussradien an der als Gussteil ausgebildeten Brücke größer zu dimensionieren, was zu deren Festigkeitserhöhung führt, die letztendlich ebenfalls zu einer Gewichtsoptimierung beiträgt, da die Brücke bei gleichbleibender Belastung in ihrer Dimensionierung kleiner ausgebildet werden kann.

Nach einem weiteren Gedanken der Erfindung ist vorgesehen, das Halteelement als Bügel auszubilden, der in seinem Krümmungsradius dem Radius der Wälzrolle angepasst ist und der zum Formschluss mit der Wälzrolle in eine darin vorgesehene Nut, vorzugsweise eine Ringnut, eingreift. Dabei sind die Breiten des Bügels und der Nut so aufeinander abgestimmt, dass der Bügel in Achsrichtung der Wälzrolle weitgehend spielfrei in der Nut einliegt.

Eine vorteilhafte Weiterbildung der Erfindung sieht vor, dass der Wälzrollenhalter quer zur Längserstreckung spiegelsymmetrisch ausgebildet ist, so dass die Käfigrückführungen identisch gestaltet sind.

In dem Fall, dass zur Lagerung der Wälzrolle im Hebel zur Auskleidung einer Mulde eine Lagerschale vorgesehen ist, kann diese Lagerschale durch Einklemmen mittels des mit dem Hebel durch Vernieten verbundenen Wälzrollenhalters am Hebel befestigt werden.

Im Übrigen lässt sich der Wälzrollenhalter aufgrund seiner einfachen Gestaltung äußerst kostengünstig herstellen, üblicherweise als Blechform-/Stanzteil.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen schematischen Aufbau einer Scheibenbremse in einem Querschnitt
- Figur 2: einen Teil der Scheibenbremse in einer perspektivischen Ansicht
- Figur 3: einen Ausschnitt des Teils gemäß der Figur 2 in einer Seitenansicht
- Figur 4: eine Einzelheit der Scheibenbremse in einer perspektivischen Ansicht.

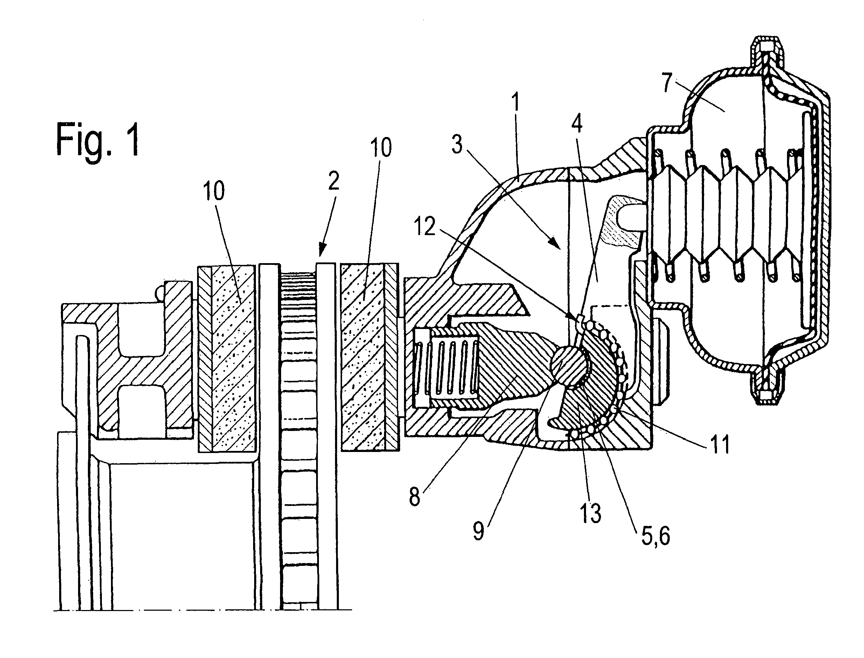

In der Figur 1 ist in schematischer Darstellung eine Scheibenbremse für ein Fahrzeug, insbesondere ein Nutzfahrzeug, in einem Halbschnitt dargestellt, die eine Bremsscheibe 2 aufweist, die an einer nicht gezeigten Achse des Nutzfahrzeuges befestigt ist und von einem Bremssattel 1 umfasst ist, der in Richtung der Bremsscheibe 2 verschiebbar sein kann.

Im Bremssattel 1 ist eine Zuspanneinrichtung 3 angeordnet, mit der bei einer über einen vorzugsweise pneumatisch betätigbaren Bremszylinder 7 ausgelösten Bremsung Bremsbeläge 10 an die Bremsscheibe 2 drückbar sind.

Hierzu greift die Zuspanneinrichtung 3 an zwei nicht dargestellte, parallel und mit Abstand zueinander in einer Brücke 8 angeordnete Stellspindeln an.

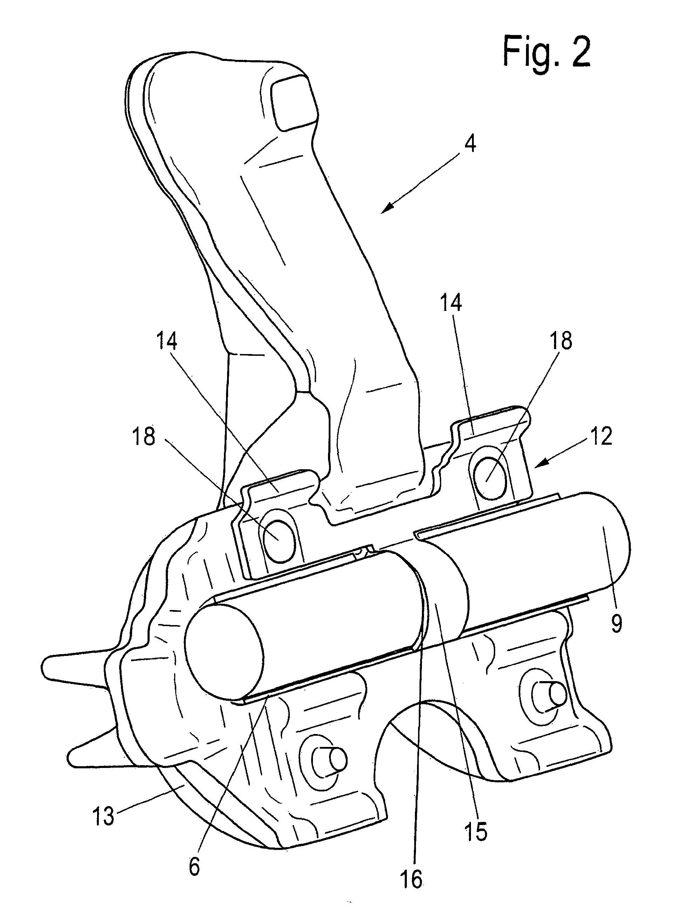

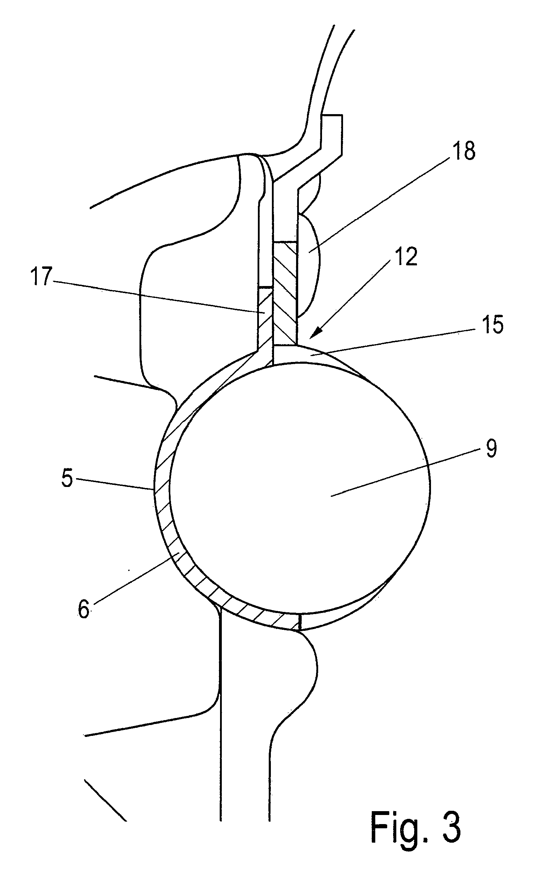

Die Zuspanneinrichtung 3 weist einen in der Figur 2 und 3 als Einzelheit gezeigten Hebel 4 auf, der mit dem Bremszylinder 7 in Wirkverbindung steht und bei dessen Betätigung in Richtung der Bremsscheibe 1 schwenkbar um eine Wälzrolle 9 ist, die parallel zur Ebene der Bremsscheibe 2 verläuft und in der Brücke 8 ebenso gelagert ist wie im Hebel 4.

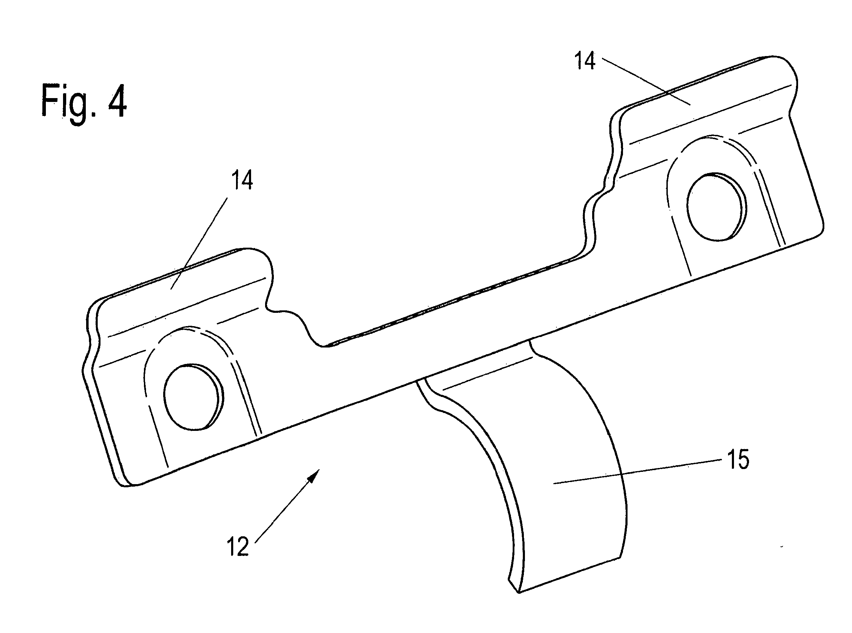

Im Bremssattel 1 sind Wälzlager 11 vorgesehen, mit jeweils in einem Käfig gehaltenen Wälzkörpern, die sich an dem in diesem Bereich als Exzenter 13 ausgebildeten Hebel 4 abstützen. Die Wälzrolle 9, die in einer eine konkave Mulde 5 des Hebels 4 auf der dem Exzenter 13 gegenüberliegenden Seite auskleidenden Lagerschale 6 einliegt, ist durch einen Wälzrollenhalter 12 axial und radial gesichert gehalten, der als Einzelteil in der Figur 4 dargestellt ist.

Um die Wälzlager 11 nach einem Zurückschwenken des Hebels 4 in eine Ausgangsstellung zurückzuführen, weist der Wälzrollenhalter 12 jedem Wälzrollenlager 11 zugeordnet eine angeformte Käfigrückführung 14 auf, die, wie in der Figur 3 besonders deutlich erkennbar ist, gegenüber der Anlage des Wälzrollenhalters 12 am Hebel 4 nach außen hin abgewinkelt ist.

Zur radialen und axialen Sicherung der Wälzrolle 9 weist der durch Niete 18 mit dem Hebel 4 verbundene Wälzrollenhalter 12 ein sich entgegen der Käfigrückführungen 14 erstreckendes, mittig angeordnetes bügelförmiges Halteelement 15 auf, das in einer Nut 16 der Wälzrolle 9 einliegt.

Der Wälzrollenhalter 12 dient gleichzeitig der Befestigung der Lagerschale 6, die in Richtung der Käfigrückführungen 14 einen abgewinkelten Schenkel 17 aufweist, an dem ein Teilbereich des Wälzrollenhalters 12 klemmend anliegt. Gegenüberliegend ist das Halteelement 15 bis zur Kante der Lagerschale 6 geführt.

### Bezugszeichenliste

- 1: Bremssattel
- 2: Bremsscheibe
- 3: Zuspanneinrichtung
- 4: Hebel
- 5: Mulde
- 6: Lagerschale
- 7: Bremszylinder
- 8: Brücke
- 9: Wälzrolle
- 10: Bremsbelag
- 11: Wälzlager
- 12: Wälzrollenhalter
- 13: Exzenter
- 14: Käfigrückführung
- 15: Halteelement
- 16: Nut
- 17: Schenkel
- 18: Niet

## Patentansprüche

1. Zuspanneinrichtung (3) für einen Bremssattel (1) einer Scheibenbremse, mit einem am Bremssattel (1) mittels jeweils in einem Käfig gehaltenen Wälzlagern abgestützten schwenkbaren Hebel (4), der in den Abstützbereichen als Exzenter (13) ausgebildet ist und in dem gegenüberliegend eine Wälzrolle (9) durch einen am Hebel (4) befestigten, mit angeformten Käfigrückführungen (14) versehenen Wälzrollenhalter (12) axial und radial gesichert gehalten ist, **dadurch gekennzeichnet, dass** der Wälzrollenhalter (12) ein mittig angeordnetes, formschlüssig in die Mantelfläche der Wälzrolle (9) eingreifendes Halteelement (15) aufweist.

2. Zuspanneinrichtung (3) nach Anspruch 1, **dadurch gekennzeichnet, dass** das Halteelement (15) bügelförmig ausgebildet ist.

3. Zuspanneinrichtung (3) nach Anspruch 1 oder 2, **dadurch gekennzeichnet, dass** das Halteelement (15) in einer Ausnehmung, vorzugsweise einer Nut (16) der Wälzrolle (9) einliegt.

4. Zuspanneinrichtung (3) nach einem der vorhergehenden Ansprüche, **dadurch gekennzeichnet, dass** die Breite des Halteelementes (15) etwa der Breite der Nut (16) entspricht.

5. Zuspanneinrichtung (3) nach einem der vorhergehenden Ansprüche, **dadurch gekennzeichnet, dass** der Wälzrollenhalter (12) quer zur Längserstreckung spiegelsymmetrisch ausgebildet ist.

6. Zuspanneinrichtung (3) nach einem der vorhergehenden Ansprüche, bei der die Wälzrolle (9) in einer eine Mulde (5) des Hebels (4) auskleidenden Lagerschale (6) einliegt, **dadurch gekennzeichnet, dass** die Lagerschale (6) durch den Wälzrollenhalter (12) gehalten ist.

7. Zuspanneinrichtung nach Anspruch 6, **dadurch gekennzeichnet, dass** die Lagerschale (6) zwischen dem Hebel (4) und dem Wälzrollenhalter (12) eingeklemmt ist.

8. Zuspanneinrichtung nach Anspruch 6 oder 7, **dadurch gekennzeichnet, dass** die Lagerschale (6) einen angeformten Schenkel (17) aufweist, der einerseits am Hebel (4) und andererseits am Wälzrollenhalter (12) anliegt.

9. Zuspanneinrichtung nach einem der Ansprüche 6 - 8, **dadurch gekennzeichnet, dass** der Wälzrollenhalter (12) als Blechform-/Stanzteil ausgebildet ist.

## Claims

1. Application device (3) for a brake calliper (1) of a disc brake, comprising a pivotable lever (4), which is supported on the brake calliper (1) by means of antifriction bearings held in a cage, which is designed as an eccentric (13) in the support regions and in which on the opposite side an antifriction roller (9) is secured axially and radially by an antifriction roller holder (12) secured to the lever (4) and provided with integral cage return devices (14), **characterised in that** the antifriction roller holder (12) comprises a holding element (15) placed in the centre and positively engaging with the circumferential surface of the antifriction roller (9).

2. Application device (3) according to claim 1, **characterised in that** the holding element (15) is designed bow-shaped.

3. Application device (3) according to claim 1 or 2, **characterised in that** the holding element (15) lies in a recess, preferably a groove (16), of the antifriction roller (9).

4. Application device (3) according to any of the preceding claims, **characterised in that** the width of the holding element (15) approximately corresponds to the width of the groove (16).

5. Application device (3) according to any of the preceding claims, **characterised in that** the antifriction roller holder (12) is designed mirror-symmetric perpendicular to the longitudinal dimension.

6. Application device (3) according to any of the preceding claims, wherein the antifriction roller (9) is lying in a bearing shell (6) lining a trough (5) of the lever (4), **characterised in that** the bearing shell (6) is held by the antifriction roller holder (12).

7. Application device according to claim 6, **characterised in that** the bearing shell (6) is clamped between the lever (4) and the antifriction roller holder (12).

8. Application device according to claim 6 or 7, **characterised in that** the bearing shell (6) has an integrally formed web (17) which bears against the lever (4) at one end and against the antifriction roller holder (12) at the other end.

9. Application device according to any of claims 6 to 8, **characterised in that** the antifriction roller holder (12) is designed as a sheet metal moulding/stamping.

## Revendications

1. Dispositif de serrage (3) pour un étrier de frein (1) d'un frein à disque, comprenant un levier (4) s'appuyant audit étrier de frein (1), qui est pivotable moyennant des paliers roulants respectifs retenus dans une cage et qui est formé dans les zones d'appui en tant qu'un excentrique (13) et dans lequel un rouleau roulant (9) est retenu moyennant un support du rouleau roulant (12) en opposition, qui est fixé audit levier (4) et muni des éléments de retour de cage (14) intégraux, de façon à empêcher un mouvement axial et radial, **caractérisé en ce que** ledit support du rouleau roulant (12) comprend un élément de retenu (15) centralement disposé et se trouvant en prise dans l'enveloppe dudit rouleau roulant de façon positive.

2. Dispositif de serrage (3) selon la revendication 1, **caractérisé en ce que** ledit élément de retenu (15) a une configuration en étrier.

3. Dispositif de serrage (3) selon la revendication 1 ou 2, **caractérisé en ce que** ledit élément de retenu (15) se pose dans un creux, de préférence une rainure (16) dudit rouleau roulant (9).

4. Dispositif de serrage (3) selon une quelconque des revendications précédentes, **caractérisé en ce que** la largeur dudit élément de retenu (15) correspond environ à la largeur de ladite rainure (16).

5. Dispositif de serrage selon la revendication 4, **caractérisé en ce que** ledit support du rouleau roulant (12) a une configuration à symétrie spéculaire à travers relativement à l'étendue longitudinale.

6. Dispositif de serrage (3) selon une quelconque des revendications précédentes, dans lequel ledit rouleau roulant (9) se pose dans une coque de palier (6) revêtant un creux (5) dudit levier (4), **caractérisé en ce que** ladite coque de palier (6) est retenue par ledit support du rouleau roulant (12).

7. Dispositif de serrage selon la revendication 6, **caractérisé en ce que** ladite coque de palier (6) est serré entre ledit levier (4) et ledit support du rouleau roulant (12).

8. Dispositif de serrage selon la revendication 6, **caractérisé en ce que** ladite coque de palier (6) présente un bras (17) intégralement y formé, qui porte, d'un côté, audit levier (4) et, d'autre côté, audit support du rouleau roulant (12).

9. Dispositif de serrage selon une quelconque des revendications 6 à 8, **caractérisé en ce que** ledit support du rouleau roulant (12) est configuré sous forme d'une partie formé/pièce découpée en tôle.
